# EUROPÄISCHE PATENTANMELDUNG

(11) **EP 3 955 210 A1**
(43) Veröffentlichungstag der Anmeldung: **16.02.2022**
(21) Anmeldenummer: 20190960.3
(22) Anmeldetag: 13.08.2020
(51) Int. Cl.: G06T 7/55, G06T 17/00

(54) **VERFAHREN ZUR REKONSTRUKTION EINES 3D-MODELLS EINER SZENE**

(71) Anmelder: Synthetic Dimension GmbH, 5020 Salzburg (AT)
(72) Erfinder: Gadermayr, Dr. Michael, 5411 Oberalm (AT); Huber, Martin, 5452 Pfarrwerfen (AT)
(74) Vertreter: Stolmár & Partner Patentanwälte PartG mbB

(57) **Zusammenfassung**

Es wird ein Verfahren zum Erstellen eines 3D-Modells einer Szene vorgestellt mit den Schritten: Bewegen eines Sensors durch die Szene; Aufnehmen von Messdaten durch den Sensor, wobei die Messdaten in vorgegebenen oder vorgebbaren zeitlichen Abständen als eine Folge von Frames aufgenommen werden, und wobei jeder Frame Video- und/oder Tiefendaten umfasst; Markieren eines ersten Frames der Folge von Frames; Überprüfen wenigstens eines weiteren Frames aus der Folge von Frames auf Kriterien, welche die Eignung der Messdaten des wenigstens einen weiteren Frames anzeigen, die Qualität und/oder den Umfang eines aus den vorher markierten Frames ermittelten 3D-Modells der Szene zu verbessern; Markieren des wenigstens einen weiteren Frames, wenn eine entsprechende Eignung festgestellt wird; Erstellung eines 3D-Teilmodells aus mehreren der markierten Frames; und Zusammenfügen der 3D-Teilmodelle zu einem 3D-Gesamtmodell.

## Beschreibung

Die Erfindung betrifft Verfahren zur Rekonstruktion eines 3D-Modells einer Szene aus Rohdaten.

Der Begriff "Szene" beschreibt dabei eine begrenzte dreidimensionale Umgebung, beispielsweise das Innere eines Gebäudes oder eines Teils davon, Außenanlagen wie Gärten oder Parks, oder Kombinationen davon.

3D-Modelle von Szenen können zu verschiedenen Zwecken genutzt werden. So ermöglicht das Vorliegen eines entsprechenden Modells die automatische Navigation autonomer Systeme in der Szene, wie z.B. Service-Roboter oder dergleichen. 3D-Modelle können genutzt werden, um die zielgerichtete Durchführung von Rettungseinsätzen beispielsweise in brennenden oder verrauchten Gebäuden zu planen und durchzuführen.

Eine besonders attraktive Anwendungsmöglichkeit von 3D-Modellen einer Szene ist die visuelle Simulation der Szene im Rahmen der Anwendung von "virtual reality" (VR) oder einer "augmented reality" (AR).

Bei einer VR-Anwendung wird einem Anwender über geeignete Ausgabemittel, beispielsweise einer 3D-Videobrille, ein simuliertes Bild der jeweiligen Szene von einem bestimmten Beobachtungspunkt aus dargestellt, wobei der Anwender den Beobachtungspunkt über geeignete Eingabemittel, wie z.B. einen Datenhandschuh, steuern kann. Dies ermöglicht dem Anwender beispielsweise einen virtuellen Besichtigungsrundgang durch die Szene, z.B. ein Museum, einen Park, oder eine interessierende Immobilie.

Bei einer AR-Anwendung wird einem Anwender über geeignete Ausgabemittel eine Überlagerung eines realen Bildes der Szene, gesehen vom derzeitigen Standort des Anwenders, mit einem simulierten Bild der Szene dargestellt. Als Ausgabemittel kann hier ebenfalls eine rein videobasierte 3D-Videobrille Verwendung finden, wobei das reale Bild über eine integrierte Kamera erzeugt wird. Alternativ kann auch eine Datenbrille Anwendung finden, in welcher das simulierte Bild über optische Elemente in das Blickfeld des Anwenders eingeblendet wird.

AR-Anwendungen können bei den schon erwähnten Rettungseinsätzen in verrauchten Gebäuden genutzt werden, um Rettungskräften die Orientierung zu erleichtern. Bei Besichtigungsvorgängen, beispielsweise von interessierenden Immobilien, können AR-Anwendungen genutzt werden, um verschiedene Ausstattungsvarianten der Szene erlebbar zu machen, beispielsweise wenn sich die Immobilie im Rohbau oder in einem renovierungsbedürftigen Zustand befindet.

3D-Modelle einer interessierenden Szene können prinzipiell manuell oder rechnergestützt aus Vermessungsdaten der Szene oder aus bestehenden Daten wie Bauplänen, Lageplänen etc. erstellt werden. Dies ist jedoch aufwendig, zudem liegen entsprechende Pläne nicht immer vor. Selbst wenn Pläne vorliegen, sind z.T. erhebliche Abweichungen zwischen Plan und realer Szene nicht ungewöhnlich.

Es sind verschiedene Verfahren bekannt, 3D-Modelle von Szenen aus 2D-Bild- oder Videodaten mit oder ohne Tiefendaten, 3D-Bildern, 3D-Punktwolken oder Kombinationen davon zu erstellen. 3D-Punktwolken können beispielsweise über 3D-Laserscanner, LIDAR-Scanner oder TOF-Kameras erstellt werden. Hierbei werden verschiedene Methoden der Künstlichen Intelligenz angewendet, um aus einer begrenzten Menge von Ausgangsdaten ein möglichst komplettes 3D-Modell zu erstellen.

Eine Gruppe von bekannten Verfahren beruht im Prinzip darauf, einzelne Punkte aus einer Punktwolke zu einem Netz zu verbinden, so dass eine Fläche aus aneinander angrenzenden Polynomen, vorzugsweise Dreiecken, entsteht. Solche Verfahren werden im Folgenden als Netzvervollständigungsverfahren (NVV) bezeichnet, Diese Verfahren eignen sich gut für großräumige Szenen mit wenig kleinteiligen Objekten. Bei Objekten entsteht allerdings das Problem, dass gerade unregelmäßig geformte Objekte aus einer Perspektive nicht voll erfasst werden können. Zwar existieren Verfahren, um die entstehenden Lücken im Netz zu schließen, allerdings entstehen dabei abhängig von der Perspektive deutlich unterschiedliche 3D-Modelle. Dies kann bei der Zusammenfassung von Teilmodellen zu einem Gesamtmodell Probleme bereiten. Als "Teilmodelle" werden hier und im Folgenden 3D-Modelle bezeichnet, die nur einen Teil der interessierenden Szene wiedergeben, da sie aus einer begrenzten Anzahl von Perspektiven ermittelt werden.

Andere bekannte Verfahren verfolgen den Ansatz, Punkte einer Punktwolke einem von mehreren bekannten Objekten zuzuordnen, die in einer Datenbank vorgehalten werden. Solche Verfahren werden im Folgenden als Objektzuordnungsverfahren (OZV) bezeichnet. Hier hängt zum einen die Qualität des erzeugten 3D-Modells von dem Umfang der Datenbank ab. Zum anderen funktionieren solche Verfahren z.T. nicht optimal mit Wanddurchbrüchen wie Türen oder Fenstern.

Obwohl die bekannten Verfahren bereits recht gute Ergebnisse liefern, bestehen jedoch noch Probleme, die einer bequemen Erstellung von 3D-Modellen von ausreichender Qualität für die anfangs genannten Anwendungen im Wege stehen.

Zum einen reicht gerade bei NVV zumeist eine einzige Perspektive nicht aus, um ein vollständiges 3D-Modell der interessierenden Szene zu erstellen. Dies ist insbesondere der Fall, wenn die Szene mehrere getrennte Räume oder Bereiche aufweist, und/oder signifikante Bereiche der Szene durch Abschattung vom Sensor nicht erfasst werden können. Um Messdaten mit ausrechend vielen Perspektiven aufzunehmen muss das jeweilige Aufnahmegerät zwischen verschiedenen Standorten bewegt werden, was zeitaufwendig ist.

Geeignete Aufnahmegeräte sind zwar zwischenzeitlich schon in tragbaren Ausführungen verfügbar, allerdings ergibt sich auch hier das Problem der genauen Positionierung an geeigneten Standorten, um die jeweiligen Messdaten aufzunehmen.

Es ist prinzipiell möglich, das jeweilige Aufnahmegerät mit hoher Wiederholrate dauernd zu betätigen, während es durch die Szene bewegt wird. Dabei wird ein Film von der Szene erzeugt, der entweder als einfacher Videofilm oder als Videofilm mit zusätzlichen Tiefendaten vorliegen kann. Tiefendaten können dabei explizit, z.B. als für jeden Bildpunkt hinterlegte Tiefeninformation, oder implizit, z.B. in Form eines mit einem Stereoobjektiv aufgenommenen 3D-Videos, vorliegen. Hierdurch wird jedoch eine immens große Datenmenge erzeugt. Hinzu kommt, dass anschließend aus jedem Einzelbild, ggf. mit den dazugehörigen Tiefendaten, ein Teilmodell erstellt und die einzelnen Teilmodelle auf geeignete Weise zu einem Gesamtmodell zusammengefügt werden müssen. Dies erfordert einen erheblichen Rechenaufwand. Dies führt insbesondere bei der Anwendung von OZV zu Schwierigkeiten.

Um den Rechenaufwand für die Erstellung des 3D-Modells aus den Messdaten zu reduzieren, und um gleichzeitig die Qualität der erzeugten Modelle zu optimieren, sieht ein Verfahren gemäß der vorliegenden Erfindung folgende Schritte vor: Bewegen eines Sensors durch die interessierende Szene, Aufnehmen von Messdaten durch den Sensor, wobei die Messdaten in vorgegebenen oder vorgebbaren zeitlichen Abständen als eine Folge von Frames aufgenommen werden, und wobei jeder Frame Bild- und/oder Tiefendaten umfasst, Markieren eines ersten Frames der Folge von Frames, Überprüfen wenigstens eines weiteren Frames aus der Folge von Frames auf Kriterien, welche die Eignung der Messdaten des wenigstens einen weiteren Frames anzeigen, die Qualität und/oder den Umfang eines aus den vorher markierten Frames ermittelten 3D-Modells der Szene zu verbessern, und Markieren des wenigstens einen weiteren Frames, wenn eine entsprechende Eignung der Messdaten des jeweiligen Frames festgestellt wird.

In der Folge werden dann aus mehreren der markierten Frames 3D-Teilmodelle erstellt, die anschließend zu einem 3D-Gesamtmodell zusammengefügt werden, um ein vollständiges 3D-Modell der interessierenden Szene zu erstellen.

Ein entsprechendes Verfahren führt insbesondere bei OZV zu einer deutlichen Reduktion des notwendigen Rechenaufwands, da die Anzahl der zu verarbeitenden Frames erheblich reduziert werden kann.

Die Überprüfung der einzelnen Frames auf Eignung erfolgt vorzugsweise durch ein KI-System, welches zuvor mit geeigneten Trainingsdaten trainiert worden ist, um eine Optimierung der Auswahl von Frames hinsichtlich des Datenvolumens, der Rechenzeit, und/oder der Modellqualität vorzunehmen. Die Modellqualität kann hierbei insbesondere die Vollständigkeit und/oder die Konsistenz des Modells umfassen. Unter der Vollständigkeit des Modells wird hier die Abwesenheit von Raumbereichen in dem 3D-Modell verstanden, für welche keine oder nur wenige Daten vorliegen. Unter der Konsistenz des Modells wird die Abwesenheit von Raumbereichen in dem 3D-Modell verstanden, für welche widersprüchliche Daten vorliegen.

Das zur Überprüfung verwendeten KI-System kann beispielsweise ein mehrschichtiges neuronales Netz umfassen, welches als Eingangsdaten die Daten des zu überprüfenden Frames sowie die Daten der bereits markierten Frames erhält, und als Ausgabe angibt, ob der zu überprüfende Frame markiert werden soll oder nicht. Das neuronale Netz kann z.B. als ein faltendes neuronales Netz (convolutional neural network, CNN) ausgeführt sein. CNNs sind besonders gut geeignet, um Frames von Messdaten zu verarbeiten. Andere Netzarchitekturen wie z.B. rekurrente neurale Netze können ebenfalls angewendet werden.

Anstelle der gesamten Frames kann das KI-System als Eingangsdaten auch vorverarbeitete Daten erhalten. So kann beispielsweise die Lage und/oder relative Größe von markanten Objekten in den Daten durch eine Vorverarbeitung ermittelt und dem KI-System als Eingangsdaten bereitgestellt werden. Ebenso können Kenndaten der Lage einer aus den Messdaten ermittelten 3D-Punktwolke als Eingangsdaten bereitgestellt werden. Das können z.B. der mittlere Abstand vom Sensor und/oder die Streubreite der Abstandswerte sein. Als weitere Eingangsdaten können dem KI-System Daten hinsichtlich der Messwertqualität des jeweiligen Frames zugeführt werden, beispielsweise ein Wert der Bildschärfe und/oder die Anzahl erfolgreich ermittelter Tiefenpunkte. Es ist auch denkbar, aus bereits markierten Frames mit begrenztem Rechenaufwand ein grobes 3D-Modell zu erstellen, aus den Daten des zu überprüfenden Frames die Sensorposition in dem 3D-Modell abzuschätzen, und diese Sensorposition dem KI-System als Eingangsdaten zuzuführen.

Als Trainingsdaten können real aufgenommene Messdaten von verschiedenen Szenen verwendet werden. Um jedoch schnell eine ausreichend große Menge von Trainingsdaten zu gewinnen, können diese auch durch Simulation aus bestehenden 3D-Modellen gewonnen werden. Dazu wird ein virtueller Sensor durch das 3D-Modell bewegt und die jeweils vom Sensor aufgenommenen Daten simuliert. Dies entspricht im Prinzip einem virtuellen Rundgang durch die Szene mit einem AR-Verfahren. Die simulierten Daten können zusätzlich verrauscht werden, um reale Messdaten besser nachzubilden. Mittels eines solchen Verfahrens kann aus bestehenden 3D-Modellen in kurzer Zeit eine große Menge von Messdaten zum Trainieren des KI-Systems gewonnen werden.

In einer möglichen Ausführung des erfindungsgemäßen Verfahrens wird die Überprüfung und Markierung der einzelnen Frames zeitgleich mit der Aufnahme der Messdaten vorgenommen. Dabei können nicht zu markierende Frames nach der Überprüfung gelöscht werden, um das Volumen der zu speichernden Daten in Grenzen zu halten. Es ist auch möglich, zusätzlich zu jedem markierten Frame eine vorgegebene bzw. vorgebbare Zahl von vor- und/oder nachlaufenden Frames ebenfalls dauerhaft zu speichern.

Das Bewegen des Sensors durch die interessierende Szene kann durch einen Bediener erfolgen, welcher den Sensor durch die Szene trägt. Dabei kann der Sensor z.B. als Body-Cam oder Head-Cam ausgeführt sein, also als am Körper oder am Kopf getragene Kamera. Dadurch kann die Aufnahme der Daten intuitiv optimiert werden, wenn der Bediener sorgsam darauf achtet, die Szene möglichst vollständig zu erfassen.

Das Bewegen des Sensors kann auch durch ein autonomes oder ferngesteuertes Trägersystem erfolgen, beispielsweise durch einen Service-Roboter oder eine Kameradrohne.

Durch das beschriebene Verfahren wird das zu verarbeitende Datenvolumen deutlich reduziert. Es wird dadurch ggf. möglich, ein genaues 3D-Modell der Szene in Echtzeit zu ermitteln. Dazu können die jeweils markierten Frames der Messdaten von dem Sensor zu einer externen Verarbeitungszentrale übermittelt werden, wo aus den vorliegenden Frames ein Teilmodell ermittelt wird. Das Teilmodell kann an das Trägersystem übermittelt werden, welches sich anhand des Teilmodells in der Szene orientieren kann, um geeignete weitere Daten aufzunehmen. Es ist auch denkbar, das Trägersystem selbst mit einem Rechnersystem auszustatten, welches die Ermittlung des 3D-Modells ausführt, ein solches Verarbeitungskonzept wird auch als "edge computing" bezeichnet, in diesem Fall kann die Datenübertragung ganz entfallen. In jedem Fall werden sowohl die zu verarbeitende und ggf. zu übertragende Datenmenge als auch der notwendige Rechenaufwand und damit der Ressourceneinsatz für die Erstellung des 3D-Modells deutlich reduziert, ohne dass dabei der Umfang und/oder die Qualität des 3D-Modells beeinträchtigt werden. Das Verfahren führt somit gegenüber bekannten Verfahren auch zu einer verbesserten Effizienz.

Zur Ermittlung des vollständigen 3D-Modells der Szene wird aus jedem der markierten Frames ein Teilmodell erzeugt. Hierbei können verschiedene KI-basierte Techniken und Verfahren angewendet werden. Methoden hierfür sind z.B. in folgenden Dokumenten beschrieben: Dai et al: "SG-NN: Sparse Generative Neural Networks for Self-Supervised Scene Completion of RGB-D Scans"; Pumarola et al: "C-Flow: Conditional Generative Flow Models for Images and 3D Point Clouds"; Yang et al: "In Perfect Shape: Certifiably Optimal 3D Shape Reconstruction from 2D Landmarks"; Li et al: "PointAugment: an Auto-Augmentation Framework for Point Cloud Classification"; Wu et al: "PQ-NET: A Generative Part Seq2Seq Network for 3D Shapes" .

Bei der bekannten Erstellung von 3D-Modellen aus einzelnen Frames werden, abhängig von dem Aufbau der Szene und der gewählten Methodik, unterschiedlich gute Ergebnisse erzielt, wobei jedes der bekannten Verfahren einzelne Schwächen aufweist, so dass ein optimales Ergebnis schwer zu erreichen ist.

Hier setzt ein weiterer Aspekt der Erfindung an. Nach diesem Aspekt weist ein Verfahren zum Ermitteln eines 3D-Modells einer Szene aus einem einzelnen Frame von Datenpunkten, die Bild- und/oder Tiefendaten darstellen, folgende Schritte auf: Segmentieren der Datenpunkte in mehrere Gruppen von Datenpunkten, welche jeweils mit hoher Wahrscheinlichkeit ein einzelnes Objekt repräsentieren; Ermitteln für jede Gruppe von Datenpunkten, welches Verfahren aus der Gruppe Netzvervollständigungsverfahren, Objektzuordnungsverfahren, für die Erstellung eines 3D-Modells aus der Gruppe von Datenpunkten geeignet ist, Erstellen eines 3D-Teilmodells aus der Gruppe von Datenpunkten nach dem ermittelten Verfahren, und Vereinigen der 3D-Teilmodelle zu einem 3D-Gesamtmodell.

Die erhaltene Punktwolke also zunächst segmentiert, um Teilmengen der Punktwolken zu erhalten, die mit großer Wahrscheinlichkeit jeweils zu einem gemeinsamen Objekt gehören. Für jedes der so separierten Objekte wird separat entschieden, ob es sich besser nach einem NVV oder nach einem OZV in ein 3D-Modell umwandeln lässt.

Sowohl für die Segmentierung der Punktwolke als auch für die Auswahl eines geeigneten Verfahrens zur Modellerstellung können wiederum KI-basierte Verfahren verwendet werden, wobei für diese Art von Aufgaben ein stützvektorbasierter Algorithmus ("Support Vector Machine" SVM) besonders geeignet sein kann. SVM sind mathematische Verfahren, um Trennflächen zwischen Punktwolken in einem mehrdimensionalen Raum zu finden, und um so eine möglichst genaue Zuordnung eines Punktes zu einer von mehreren getrennten Punktgruppen zu ermöglichen. Dabei können die Dimensionen des Raums reale geometrische Dimensionen sein, wie z.B. für die Segmentierung der Punktwolke eines aufgenommenen Frames in mehrere Objekte.

Die Dimensionen des Raums können aber auch abstrakte Dimensionen sein. Um beispielsweise eine Unterscheidung zu ermöglichen, ob eine bestimmte Punktwolke besser mit einem NVV oder mit einem OZV verarbeitet wird, kann ein rekurrentes neuronales Netz (recurrent neural network RNN) verwendet werden, um aus einer Punktwolke, die ein Objekt repräsentiert, einen einzigen n-dimensionalen Punkt zu berechnen. Dieser n-dimensionale Punkt kann dann an eine SVM übergeben werden, welche bestimmt, ob der Punkt zu einer ersten Punktgruppe oder einer zweiten Punktgruppe gehört. Die erste Punktgruppe kann dabei für Objekte stehen, die besser mit einem NVV verarbeitet werden, während die zweite Punktgruppe für Objekte stehen kann, die besser mit einem OZV zu verarbeiten sind.

Dabei können das neuronale Netz und die SVM gemeinsam trainiert werden. Dazu werden dem neuronalen Netz eine große Anzahl von Punktwolken jeder Gruppe von Objekten zugeführt. Dieses erzeugt dann zunächst willkürlich n-dimensionale Punkte und gibt diese an die SVM, welche versucht, eine scharfe Trennung zwischen den jeweiligen Objektgruppen zu erreichen. Die Güte der erreichbaren Trennung wird dann in einer Rückkopplungsschleife an das neuronale Netz gegeben, welches wiederum die Berechnungsweise der n-dimensionalen Punkte anpasst, um die Güte der Trennung zu optimieren. Die für die beschriebene Optimierung verwendeten Trainingsdaten können wiederum echte Messdaten oder simulierte Testdaten sein.

Auch andere KI-basierte Verfahren können sowohl für die Segmentierung der Punktwolke als auch für die Auswahl eines geeigneten Verfahrens zur Modellerstellung verwendet werden, wobei für diese Art von Aufgaben ein mehrschichtiges neuronales Netzwerk besonders geeignet ist. Architekturen wie PointNet (Qi et al: "PointNet: Deep Learning on Point Sets for 3D Classification and Segmentation") oder PointNet++ (Qi et al: "PointNet++: Deep Hierarchical Feature Learning on Point Sets in a Metric Space") nutzen als Eingabe Vektoren bestehend aus einzelnen Punkten und können, basierend auf diesen, Segmentierungen oder Klassifikationen erzeugen.

Zum Training dieser Architekturen sind Paare aus Eingabedaten (Punktwolke) und Ausgabedaten (z.B. Objektklasse) notwendig.

Sollen mehrere Aufgaben (zB Segmentierung und Klassifikation) gleichzeitig gelernt werden, so können die Parameter (Netzwerkgewichte) geteilt werden (parametersharing), wodurch die Effizienz und Effektivität des Trainings gesteigert werden kann.

Diese Methode kann ebenfalls angepasst werden, um zu entscheiden, ob eine bestimmte Punktwolke besser mit einem NVV oder mit einem OZV verarbeitet werden sollte. Hierfür müssen hauptsächlich die Paare der Daten fürs Training angepasst werden.

Während die Eingabedaten unverändert bleiben, wird als Ausgabe pro Eingabe ein skalarer Binärwert definiert (zB 0: NVV, 1: OZV). Somit wird das Netzwerk daraufhin optimiert wird, diesen (und somit das bevorzugte Verfahren) vorherzusagen. Die Daten für das Training, insbesondere die Ausgabedaten, können durch empirische Experimente bestimmt werden.

Da in diesem Vorhaben speziell die menschliche Wahrnehmung im Vordergrund steht, kann dies beispielsweise mittels einer Gruppe von Testpersonen stattfinden, welche die Qualität der Daten subjektiv einschätzt. Durch Mittelung (mean-opinion-score), kann schließlich pro Eingabedatum entschieden werden, ob NVV oder OZV das vorteilhafte Verfahren darstellen.

Andere Netzarchitekturen können ebenfalls angewendet werden.

Nach der Zuordnung der einzelnen Objekte wird aus jeder der beiden Gruppen, also der Gruppe von Objekten, die für ein OZV geeignet sind, und der Gruppe von Objekten, die für ein NVV geeignet sind, zunächst ein separates 3D-Halbmodell erstellt, wobei entsprechend ein NVV oder ein OZV angewendet wird. Als Halbmodell wird hier und im Folgenden ein 3D-Modell bezeichnet, welches nur die Objekte beinhaltet, welche mit einem OZV oder einem NVV rekonstruiert wurde. Die jeweiligen Verfahren beinhalten erneut den Einsatz von KI-Methoden. Diese sind in den oben genannten Artikeln beschrieben und sollen daher hier nicht weiter erörtert werden. Anschließend werden die beiden 3D-Halbmodelle zu einem gemeinsamen 3D-Modell bzw. 3D-Teilmodell zusammengeführt. Dies ist relativ unkompliziert, da beide 3D-Halbmodelle aus der selben Perspektive ermittelt wurden und somit keine erneute Ausrichtung zueinander erfolgen muss.

Die nach dem oben beschriebenen Verfahren aus den einzelnen markierten Frames ermittelten 3D-Teilmodelle werden dann zu einem 3D-Gesamtmodell zusammengefasst, wobei die Ausrichtung der einzelnen 3D-Teilmodelle anhand von markanten Strukturen in den Bereichen erfolgt, in welchen sich die 3D-Teilmodelle überlappen. Hierbei ist zu berücksichtigen, dass die nach bekannten Methoden berechneten 3D-Modelle in der Regel aus zu einem Netz verbundenen Punktwolken aufgebaut sind. Dies stellt bei der Rekonstruktion der Szene aus einem einzelnen Frame kein Problem dar. Um zwei sich überlappende 3D-Teilmodelle zueinander auszurichten sind diese Punktwolken nicht gut geeignet, da die Lage der einzelnen Punkte in den einzelnen 3D-Teilmodellen nicht korreliert. Es ist daher notwendig, aus den Punktwolken geometrische Strukturen zu extrahieren, welche dann zueinander ausgerichtet werden können. Hierzu bieten sich ebene Flächen oder Kanten besonders an. Die Extraktion von Flächen und/oder Kanten aus Punktwolken ist an sich bekannt und wird hier daher nicht näher beschrieben. Die 3D-Teilmodelle werden dann so zueinander ausgerichtet, dass korrespondierende Konturen bestmöglich übereinstimmen.

Für die Zusammenfassung der 3D-Teilmodelle kann ebenfalls ein KI-basiertes Verfahren verwendet werden. Beispielsweise kann auch hier ein rekurrentes oder faltendes mehrschichtiges neuronales Netz verwendet werden, welchem die 3D-Teilmodelle als Eingangsdaten zugeführt werden. Als Ausgangsdaten kann das neuronale Netz die relative Lage der 3D-Teilmodelle zueinander ausgeben, so dass die 3D-Teilmodelle mit einer einfachen Operation zusammengefasst werden können.

Zum Trainieren des für die Zusammenfassung der 3D-Teilmodelle zu verwendenden KI-Systems können ähnlich wie oben zu der Überprüfung der Frames beschrieben reale oder simulierte Messdaten und daraus ermittelte 3D-Teilmodelle verwendet werden, deren relative Lage zueinander bekannt ist.

Gemäß eines weiterer Aspekts der Erfindung können zur Kalibrierung des 3D-Modells der Szene vor, während oder nach dem Zusammenfügen der Teilmodelle zusätzliche Daten verwendet werden. So können z.B. Außenaufnahmen eines Gebäudes, wie Luft- oder Satellitenbilder, verwendet werden, um einen Außenumriss des Gebäudes zu erstellen, in welchen das zu ermittelnde 3D-Modell eingepasst werden kann. Dadurch lassen sich insbesondere Verzerrungen und Winkelfehler korrigieren, die durch Messungenauigkeiten an engen Durchgängen wie Türen entstehen können.

Mit den beschriebenen Verfahren ist es möglich, 3D-Modelle von interessierenden Szenen mit hoher Qualität und gleichzeitig mit überschaubarem Daten- und Rechenaufwand zu ermitteln.

Nachfolgend wird ein Ausführungsbeispiel anhand einiger Figuren dargestellt, um die beschriebenen Verfahren näher zu erläutern. Es zeigen:
Fig. 1: Einen Grundriss einer Szene,
Fig. 2: Den Grundriss der Fig. 1 mit eingezeichneter Trajektorie eines Sensors,
Fig. 3a-d: Frames mit Messdaten.

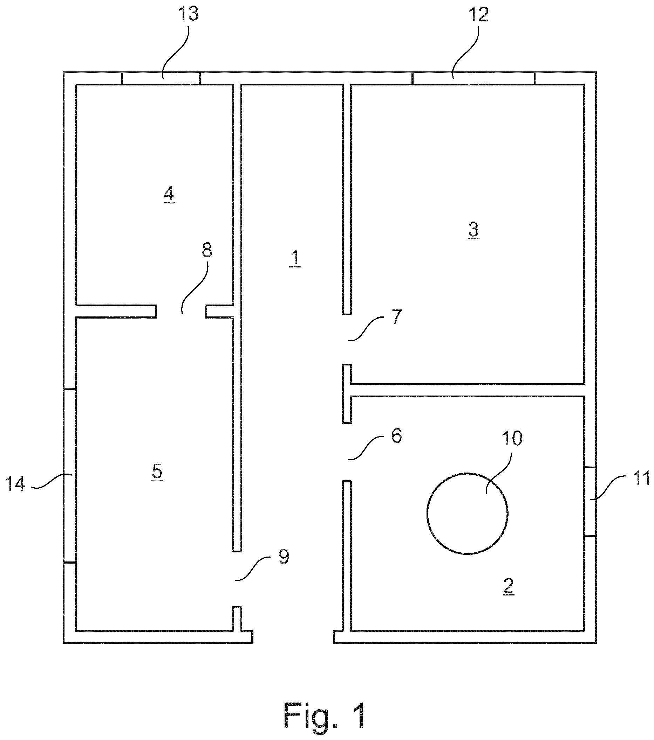

In Figur 1 ist eine Szene dargestellt, bei der es sich im dargestellten Beispiel um eine Wohnung handelt. Um einem potentiellen Käufer der Wohnung einen virtuellen Rundgang durch die Wohnung zu ermöglichen, soll ein 3D-Modell der Wohnung erstellt werden. Die Wohnung umfasst einen zentralen Verbindungsflur 1 sowie Zimmer 2, 3, 4, 5, welche durch Türdurchgänge 6, 7, 8, 9 miteinander verbunden sind. In dem Zimmer 2 steht ein Objekt 10, beispielsweise ein Tisch. In den Wänden der Zimmer 2, 3, 4, 5 sind Fenster 11, 12, 13, 14 vorgesehen.

Um die Rohdaten für die Erstellung des 3D-Modells zu generieren, wird ein Sensor, beispielsweise eine TOF-Kamera oder eine Video-Kamera mit integriertem LIDAR-Sensor, durch die Szene bewegt. Der Sensor kann auch eine Stereo-Videokamera sein, aus deren Bildern ebenfalls Tiefendaten ermittelt werden können. Dazu kann eine Person den tragbaren Sensor durch die Szene tragen, z.B. als Head- oder Bodycam, oder der Sensor ist an einem mobilen Trägersystem befestigt, welches sich ferngesteuert oder autonom durch die Szene bewegt.

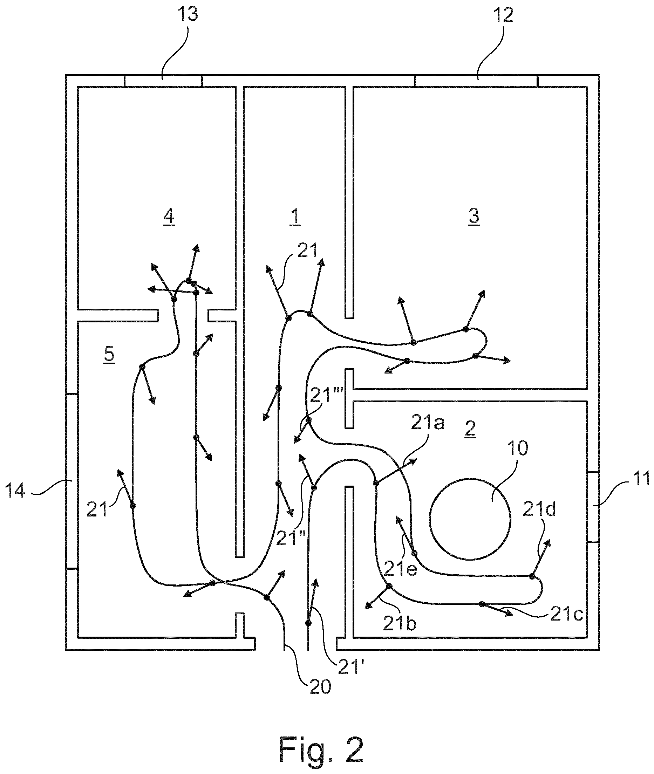

Eine mögliche Trajektorie 20 des Sensors ist in Figur 2 dargestellt. Es ist zu sehen, dass der Sensor durch den Flur 1 und alle Zimmer 2, 3, 4, 5 bewegt wird. Pfeile 21 zeigen dabei eine jeweilige Blickrichtung des Sensors an.

Während der Bewegung des Sensors durch die Szene, die beispielsweise 20 Minuten dauern kann, nimmt der Sensor Daten in Form von Frames auf. Dabei werden beispielsweise mit einer Wiederholrate von 50 Frames pro Sekunde hochaufgelöste Videobilder mit integrierten Tiefendaten aufgezeichnet, sodass ein Film entsteht. Die Daten können im Sensor gespeichert und/oder in Echtzeit zu einer nicht dargestellten Basisstation gestreamt werden. Die resultierende Datenmenge ist sehr hoch, so dass eine anschließende Auswertung zur Erstellung des 3D-Modells sehr zeitaufwendig ist. Für die Erstellung hochwertiger 3D-Modelle sind dabei hoch aufgelöste Frames in guter Bildqualität unverzichtbar, daher sind gängige verlustbehaftete Datenkompressionsverfahren hier nicht oder nur begrenzt einsetzbar.

Zur Reduktion des Rechenaufwands wird der aufgenommene Film durch ein KI-System gefiltert. Dazu wird ein erster Frame des Films markiert, der beispielsweise am Anfang der Trajektorie 20 bei Pfeil 21' aufgenommen wird. Nachfolgende Frames werden durch das KI-System, welches beispielsweise ein rekurrentes oder ein faltendes neuronales Netz umfassen kann, daraufhin geprüft, ob der jeweilige Frame ein aus den bereits zuvor markierten Frames erstelltes 3D-Teilmodell sinnvoll verbessern oder erweitern kann. Ist dies der Fall, so wird der weitere Frame ebenfalls markiert, andernfalls wird er nicht markiert. Je nach Datenvolumen der Frames und Speichervolumen des Sensors, bzw. Bandbreite einer Datenübertragung zwischen Sensor und einer Basisstation, können nicht markierte Frames verworfen oder trotzdem gespeichert werden. Ggf. kann eine gewisse Anzahl von vor- und/oder nachlaufenden Frames zu jedem markierten Frame ebenfalls gespeichert werden.

Die Relevanz eines Frames hängt sowohl von dem Standort der Aufnahme als auf von der Blickrichtung ab. So fügt beispielsweise ein bei Pfeil 21" aufgenommener Frame gegenüber dem bei Pfeil 21' aufgenommenen Frame kaum relevante Information hinzun und wird demnach nicht markiert, während ein bei Pfeil 21'" fast vom selben Standort aufgenommener Frame durch die entgegengesetzte Blickrichtung sehr relevant ist und daher auch markiert wird.

Bei der Erstellung des 3D-Modells werden nun aus den einzelnen Frames 3D-Teilmodelle ermittelt, welche anschließend zu einem 3D-Gesamtmodell zusammengesetzt werden.

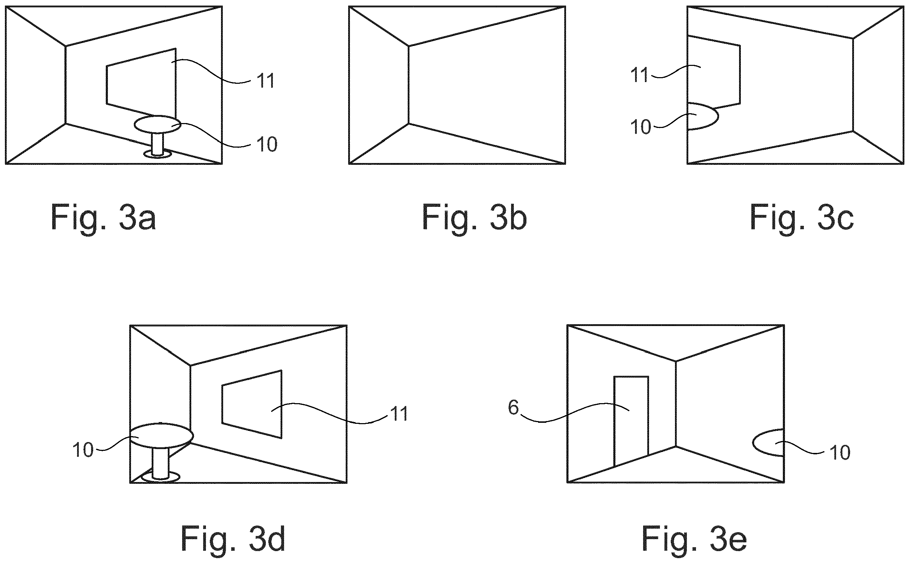

In den Figuren 3a bis 3d sind Frames dargestellt, die bei den Pfeilen 21a, 21b, 21c, 21d, 21e aufgenommen werden. Sie zeigen jeweils unterschiedliche Perspektiven des Zimmers 2.

Es ist zu erkennen, dass in dem ersten Frame (Fig. 3a) das Fenster 11 teilweise durch den Tisch 10 verdeckt ist, was die genaue Modellierung des Fensters 11 in einem 3D-Modell erschwert. Gleiches gilt für den dritten Frame (Fig. 3c). Der vierte Frame (Fig. 3d) hingegen zeigt das Fenster 11 vollständig, so dass ein 3D-Modell des Zimmers 2 aus den fünf dargestellten Frames vollständig erstellt werden kann.

Bei der Auswertung der Frames, die den Tisch 10 zeigen, ist die Erstellung eines 3D-Teilmodells schwierig. Die Zimmerwände, die Tür 6 und das Fenster 11 lassen sich gut mit einem NVV auswerten, welches jedoch für den Tisch 10 nicht gut geeignet ist. Für den Tisch 10 eignet sich eher ein OZV, welches wiederum für Wände und Fenster weniger geeignet ist.

Um dieses Problem zu lösen werden die Daten der einzelnen Frames zunächst durch ein KI-System segmentiert, also in Datengruppen unterteilt, die jeweils zu einem Element gehören. KI-Systeme für entsprechende Segmentieraufgaben sind dem Fachmann bekannt, sie basieren häufig auf SVMs oder nutzen CNNs. In dem Frame der Figur 3a werden beispielsweise bei der Segmentierung die Elemente "W and links", "W and rechts", "Fenster", "Tisch", "Decke", "Fußboden" getrennt werden.

Die zu dem jeweiligen Element gehörenden Daten werden jetzt durch einen weiten Algorithmus auf ihre Eignung für ein NVV oder ein OVV geprüft. Dazu ist ebenfalls eine SVM geeignet, welche auf Basis umfangreicher Trainingsdaten eine als Eingangsdaten präsentierte Punktwolke einem der beiden Verfahren zuordnet.

Die Segmentierung und Zuordnung der einzelnen Objekte können auch durch ein CNN oder eine Architektur wie PointNet erfolgen. Dabei können Segmentierung und Zuordnung getrennt oder kombiniert in einem "end to end" Verfahren erfolgen.

Wände, Fenster 11, Fußboden und Zimmerdecke werden durch ein NVV modelliert. In einem solchen Verfahren wird aus einer vorliegenden Punktwolke ein Netz erstellt, indem benachbarte Punkte verbunden werden. Dabei können die resultierenden Netze optimiert werden, z.B. durch Glättung, Angleichung der Punktdichte oder ähnliches. Entsprechende Verfahren sind z.B. aus dem Artikel Berger et al: "A Survey of Surface Reconstruction from Point Clouds" bekannt.

Der Tisch 10 wird hingegen in einem Objektzuordnungsverfahren verarbeitet. Dazu wird die Punktwolke durch einen KI-Algorithmus mit Objekten verglichen, die in einer Datenbank gespeichert sind. Sobald ein passendes Objekt gefunden ist, wird ein in der Datenbank hinterlegtes exaktes 3D-Modell dieses Objektes in das zu erstellende 3D-Teilmodell eingefügt. Entsprechende Verfahren sind z.B. aus dem Artikel Aubry et al: "Seeing 3D chairs: exemplar part-based 2D-3D alignment using a large dataset of CAD models"bekannt.

Die aus jedem einzelnen Frame ermittelten 3D-Teilmodelle werden dann zu einem 3D-Gesamtmodell der Szene zusammengefügt. Im dargestellten Beispiel werden für den Flur 1 und die Zimmer 3, 4, 5 jeweils wenigstens vier 3D-Teilmodelle vorliegen, aus dem Zimmer 2 wenigstens 5.

Zur Ausrichtung der 3D-Teilmodelle zueinander werden Bereiche ausgewertet, in denen sich die 3D-Teilmodelle überlappen. Geometrisch definierte Objekte in diesen Überlappungsbereichen werden dabei durch einen Algorithmus gematcht, welcher einen Ausrichtungsfehler aller Objekte minimiert.

Dabei ist zu berücksichtigen, dass die nach einem NVV ermittelten 3D-Teilmodelle nicht zwangsläufig solche geometrischen Objekte beinhalten. Während z.B. in den Figuren 3a-d zwar Kanten und große ebene Flächen sichtbar sind, finden sich hierfür nicht zwangsläufig Repräsentationen in den 3D-Teilmodellen, welche ja lediglich ein aus einer Punktwolke generiertes engmaschiges Netz beinhalten. Dabei ist die Lage der Knoten der Netze in den 3D-Teilmodellen zufällig.

Es müssen daher in einem Zwischenschritt Kanten und ebene Flächen in den 3D-Teilmodellen ermittelt werden. Dazu können z.B. bekannte Regressionsverfahren genutzt werden. Die so ermittelten Objekte werden dann zur Ausrichtung der 3D-Teilmodelle herangezogen.

Das Zusammenfügen der 3D-Teilmodelle funktioniert dann mit hoher Genauigkeit, wenn ausreichend überlappende Bereiche existieren. Während dies für einzelne Zimmer kein Problem ist, kann es bei dem Zusammenfügen über mehrere Zimmer, die nur durch einen engen Türdurchlass verbunden sind, zu Ausrichtungsfehlern kommen. Dadurch kann das 3D-Gesamtmodell Verzerrungen aufweisen.

Um dies zu verhindern kann bei der Zusammenfassung der 3D-Teilmodelle ein Gesamtumriss der Szene berücksichtigt werden, der beispielsweise aus Außen-, Luft-, und/oder Satellitenaufnahmen ermittelt werden kann. Dabei können sinnvolle Annahmen zu Randbedingungen getroffen werden, z.B. konstante Dicke von Innen- und/oder Außenwänden, etc.

Das hier beschriebene Ausführungsbeispiel dient lediglich zum besseren Verständnis der Erfindung, ohne diese einzuschränken. Der Schutzbereich ist anhand der anliegenden Patentansprüche zu ermitteln.

## Patentansprüche

1. Verfahren zum Erstellen eines 3D-Modells einer Szene mit den Schritten:
- Bewegen eines Sensors durch die Szene,
- Aufnehmen von Messdaten durch den Sensor, wobei die Messdaten in vorgegebenen oder vorgebbaren zeitlichen Abständen als eine Folge von Frames aufgenommen werden, und wobei jeder Frame Bild- und/oder Tiefendaten umfasst,
- Markieren eines ersten Frames der Folge von Frames,
- Überprüfen wenigstens eines weiteren Frames aus der Folge von Frames auf Kriterien, welche die Eignung der Messdaten des wenigstens einen weiteren Frames anzeigen, die Qualität und/oder den Umfang eines aus den vorher markierten Frames ermittelten 3D-Modells der Szene zu verbessern,
- Markieren des wenigstens einen weiteren Frames, wenn eine entsprechende Eignung festgestellt wird,
- Erstellung eines 3D-Teilmodells aus mehreren der markierten Frames, und
- Zusammenfügen der 3D-Teilmodelle zu einem 3D-Gesamtmodell.

2. Verfahren nach Anspruch 1, **dadurch gekennzeichnet, dass** die Überprüfung unter Anwendung eines KI-Systems, vorzugsweise eines faltenden neuronalen Netzes, erfolgt.

3. Verfahren nach Anspruch 2, **dadurch gekennzeichnet, dass** die Messdaten eines zu überprüfenden Frames vor der Überprüfung durch das KI-System einer Vorverarbeitung unterzogen werden.

4. Verfahren nach Anspruch 3, **dadurch gekennzeichnet, dass** die Vorverarbeitung eine Objekterkennung umfasst.

5. Verfahren nach Anspruch 3 oder 4, **dadurch gekennzeichnet, dass** die Vorverarbeitung eine statistische Analyse von Tiefendaten umfasst.

6. Verfahren nach einem der vorangehenden Ansprüche, **dadurch gekennzeichnet, dass** die Überprüfung der Frames während der Aufnahme der Messdaten in Echtzeit vorgenommen wird.

7. Verfahren nach Anspruch 6, **dadurch gekennzeichnet, dass** nicht markierte Frames verworfen werden.

8. Verfahren nach einem der vorangehenden Ansprüche, **dadurch gekennzeichnet, dass** die Bewegung des Sensors durch ein autonomes oder ferngesteuertes Trägersystem erfolgt.

9. Verfahren nach einem der vorangehenden Ansprüche, **dadurch gekennzeichnet**, die Erstellung eines 3D-Teilmodells aus einem einzelnen Frame von Datenpunkten, die Bild- und/oder Tiefendaten darstellen, folgende Schritte umfasst:
- Segmentieren der Datenpunkte in mehrere Gruppen von Datenpunkten, welche jeweils mit hoher Wahrscheinlichkeit ein einzelnes Objekt repräsentieren,
- Ermitteln für jede Gruppe von Datenpunkten, welches Verfahren aus der Gruppe Netzvervollständigungsverfahren, Objektzuordnungsverfahren, für die Erstellung eines 3D-Modells aus der Gruppe von Datenpunkten geeignet ist,
- Erstellen eines 3D-Halbmodells aus der Gruppe von Datenpunkten nach dem ermittelten Verfahren, und
- Vereinigen der 3D-Halbmodelle zu einem 3D-Teilmodell.

10. Verfahren nach Anspruch 9, **dadurch gekennzeichnet, dass** die Ermittlung des geeigneten Verfahrens mittels eines KI-Systems erfolgt.

11. Verfahren nach Anspruch 10, **dadurch gekennzeichnet, dass** zur Ermittlung des geeigneten Verfahrens die Gruppe von Datenpunkten in einen einzigen, n-Dimensionalen Datenpunkt in einem Koordinatenraum transformiert wird, in welchem für Netzvervollständigungsverfahren geeignete Objekte und für ein Objektzuordnungsverfahren geeignete Objekte als separierbare Punktwolken abgebildet sind.

12. Verfahren nach Anspruch 11, **dadurch gekennzeichnet, dass** die Transformation mittels eines faltenden oder rekurrenten neuronalen Netzes erfolgt.

13. Verfahren nach Anspruch 10 oder 11, **dadurch gekennzeichnet, dass** die Zuordnung des n-Dimensionalen Datenpunkts zu einem geeigneten Verfahren mittels einer Support Vector Machine erfolgt.

14. Verfahren nach Anspruch 10, **dadurch gekennzeichnet, dass** die Ermittlung des geeigneten Verfahrens in einem "end to end" Verfahren mittels eines mehrschichtigen neuronalen Netzwerks erfolgt.

15. Verfahren nach Anspruch 14, **dadurch gekennzeichnet, dass** die Segmentierung und die Ermittlung des geeigneten Verfahrens gemeinsam in einem "end to end" Verfahren mittels eines mehrschichtigen neuronalen Netzes erfolgt.
